Europäisches Patentamt

European Patent Office

Office européen des brevets

(19)

(11) Numéro de publication: **0 270 412 B1**

# (12) FASCICULE DE BREVET EUROPEEN

(45) Date de publication de fascicule du brevet:
29.05.91

(51) Int. Cl.⁵: **F02K 9/34**, //F02K9/24

(21) Numéro de dépôt: 87402481.3

(22) Date de dépôt: 04.11.87

(54) **Procédé de fabrication d'une chambre de combustion de propulseur a propergol solide.**

(30) Priorité: 05.11.86 FR 8615426

(43) Date de publication de la demande:
08.06.88 Bulletin 88/23

(45) Mention de la délivrance du brevet:
29.05.91 Bulletin 91/22

(84) Etats contractants désignés:
BE CH DE ES FR GB IT LI SE

(56) Documents cités:
DE-C- 22 661          FR-A- 921 153
FR-A- 1 356 673       FR-A- 1 386 856
FR-A- 2 123 036       FR-A- 2 363 709
FR-A- 2 552 494       US-A- 3 301 924
US-A- 4 495 764

(73) Titulaire: **SOCIETE EUROPEENNE DE PROPUL-
SION**
**24 rue Salomon de Rothschild**
**F-92150 Suresnes(FR)**

(72) Inventeur: **Crapiz, Dino**
**28, rue du Déhès**
**F-33160 Le Haillan(FR)**

(74) Mandataire: **Joly, Jean-Jacques**
**CABINET BEAU DE LOMENIE 55, rue d'Amsterdam**
**F-75008 Paris(FR)**

## Description

La présente invention concerne les chambres de combustion de propulseurs à propergol solide.

Un propergol à propulseur solide comprend généralement un bloc de poudre ou propergol logé à l'intérieur d'une structure tubulaire avec interposition éventuelle d'une protection thermique et des fonds avant et arrière liés à la structure tubulaire. L'ensemble de la structure tubulaire et des deux fonds constitue la chambre de combustion.

Différents procédés sont actuellement utilisés pour réaliser des propulseurs à propergol solide.

Certains procédés consistent à réaliser d'abord la structure tubulaire de la chambre et à y couler ensuite le bloc de propergol. C'est le cas des propulseurs métalliques ou en matériau composite. L'assemblage peut être complété par des fonds rapportés et verrouillés par des coins, comme décrit dans la demande de brevet français No 86 00 877 (publication No 2 593 238) au nom de la demanderesse. Cette technique permet de réaliser une chambre rigide et ayant une bonne tenue en température puisque les éléments constitutifs de la chambre sont fabriqués indépendamment, ce qui permet de tenir compte au mieux des exigences pour chacun d'entre eux.

Toutefois, il est très difficile par cette technique de mettre en place dans la structure tubulaire de la chambre de combustion le propergol constitué d'un bloc ou, éventuellement, d'un assemblage de segments, car ceci conduit à des assemblages délicats, en aveugle.

Il avait bien été proposé dans le brevet français No 1 386 856 de réaliser la chambre de combustion sous forme de modules comprenant chacun un secteur tubulaire formant une partie de la structure tubulaire, et un secteur de cylindre formant une partie du bloc de propergol et fixé sur le secteur tubulaire. Dans le cas de propulseurs de grandes dimensions, il devait être alors possible d'acheminer les modules séparément sur le site de lancement pour les assembler ensuite, ce qui évitait d'avoir à transporter la chambre de propulsion entièrement montée. A l'évidence, ce procédé pose des problèmes délicats à résoudre, tant au niveau de la fabrication des modules que de leurs assemblages pour obtenir une chambre ayant à la fois un bloc de propergol et une structure tubulaire sans défauts par simple réunion des modules.

Un autre procédé connu, tel que celui décrit dans le brevet français No 1 356 673 ou, plus récemment, dans le brevet français No 83 15 263 (publication No 2 552 494) au nom de la demanderesse, consiste à fabriquer d'abord le propergol et à réaliser ensuite la structure tubulaire de la chambre de combustion en un matériau composite filamentaire, par exemple du type verre/résine époxy ou carbone/résine époxy, par bobinage sur le propergol puis polymérisation de la résine. Mais cette technique impose d'utiliser une résine ayant une température de polymérisation relativement basse, c'est-à-dire inférieure à environ 100 degrés C, en raison de la présence du propergol. Il est alors difficile, voire impossible d'assurer une tenue irréprochable de la structure tubulaire aux échauffements auxquels peut être soumis l'engin comportant le propulseur.

Aussi, la présente invention a-t-elle pour but de fournir un procédé permettant de réaliser des chambres de combustion dont le comportement mécanique n'est pratiquement pas affecté par les échauffements subis en service et sans que des difficultés particulières soient rencontrées pour mettre en place le propergol, même lorsqu'il est constitué d'un assemblage de segments, et pour assembler la chambre.

Ce but est atteint grâce à un procédé de fabrication d'une chambre de combustion munie de fonds arrière et avant, comprenant les étapes de réalisation séparée du propergol, de formation d'une structure tubulaire entourent le propergol, liée à celui-ci et constituée de secteurs de tube juxtaposés, et de réalisation d'un bobinage autour de la structure tubulaire, procédé selon lequel, conformément à l'invention, le propergol est constitué par au moins un bloc cylindrique, les fonds arrière et avant sont assemblés au propergol, aux extrémités de celui-ci, puis la structure tubulaire est formée par mise en place des secteurs de tube autour du propergol et des fonds avec interposition d'une colle, avant réalisation dudit bobinage au moins en direction circonférentielle.

Les secteurs de tube peuvent être réalisés par découpes longitudinales d'un tube préfabriqué. Le bobinage circonférentiel assure la tenue à la pression de la chambre de combustion pendant son fonctionnement tandis que la rigidité est apportée par la structure tubulaire formée par l'assemblage des secteurs.

Par ailleurs, les secteurs de tube étant réalisés en dehors du propergol, ils peuvent être fabriqués de manière à présenter la rigidité et la tenue en température souhaitées. En particulier, ils peuvent être fabriqués en un matériau composite dont la matrice est une résine à haute tenue thermique, ce qui lui confère encore une plus grande immunité aux échauffements rencontrés en service. Or, des résines à haute tenue thermique ont en règle générale des températures de polymérisation élevées qui rendent impossible leur utilisation dans les procédés connus où la structure tubulaire est constituée par un matériau composite filamentaire bobiné directement sur le propergol.

L'invention sera mieux comprise à la lecture de la description faite ci-après à titre indicatif mais non limitatif en référence aux dessins annexés sur lesquels :

- la figure 1 est une vue en coupe montrant l'assemblage du propergol, constitué de deux segments, et des fonds avant et arrière ;
- la figure 2 est une vue en perspective d'un tube sectionné longitudinalement en secteurs,
- la figure 3 est une vue en coupe montrant le montage sur le propergol des secteurs constituant la structure tubulaire de la chambre de combustion,
- la figure 4 illustre le bobinage circonférentiel réalisé sur les secteurs de tube,
- les figures 5 et 6 illustrent des étapes successives d'une variante de mise en oeuvre du procédé selon l'invention, et
- la figure 7 illustre une variation de construction de la structure tubulaire sur le propergol.

Les mêmes références désignent des éléments identiques ou similaires dans les différentes figures.

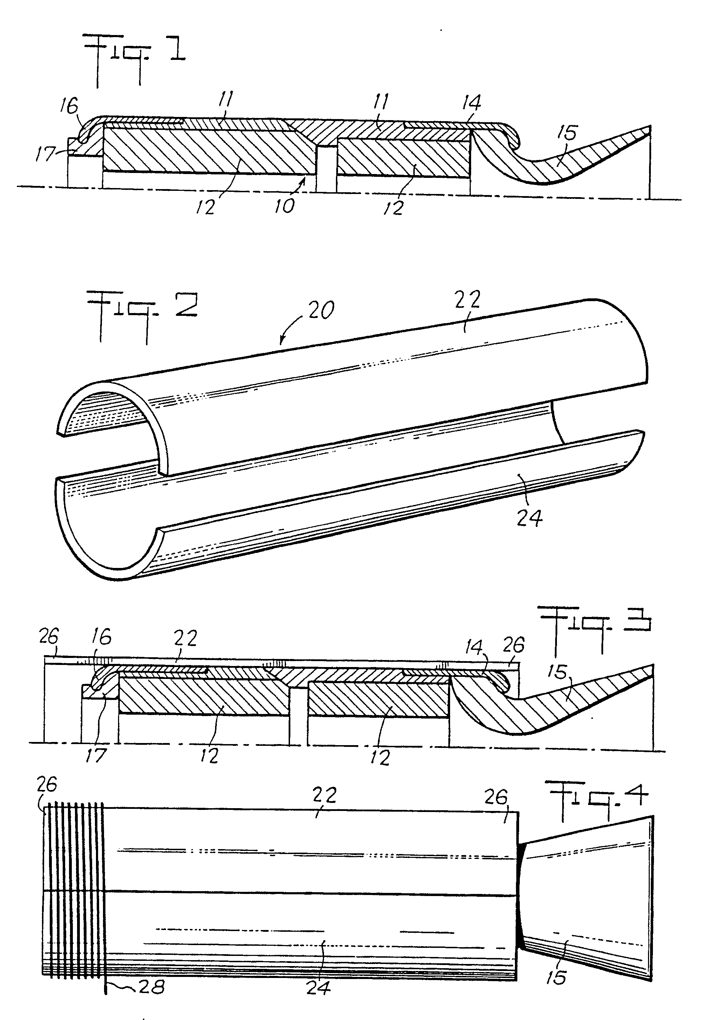

Sur la figure 1, on a représenté un propergol 10 formé de deux segments 12 assemblés qui peuvent être équipés à leur périphérie d'un revêtement de protection thermique 11 destiné à protéger la structure de la chambre de combustion pendant la phase de fonctionnement. Le propergol 10 est muni de fonds arrière 14 et avant 16 préfabriqués et présentant chacun une surface extérieure cylindrique. Le fond avant comporte une embase 17 et le fond arrière porte une tuyère 15.

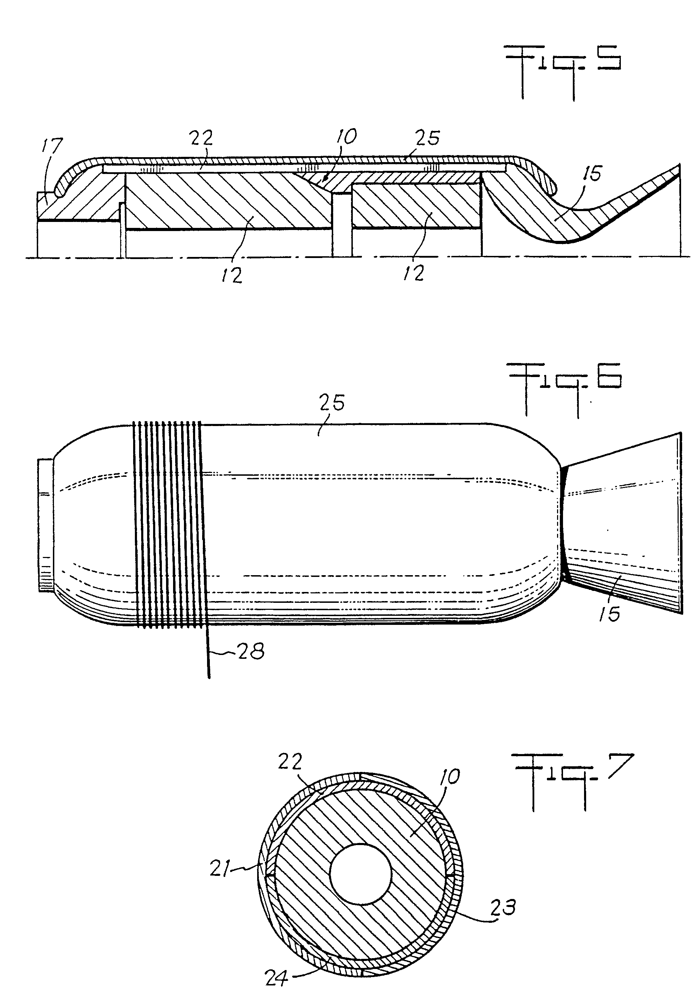

La structure tubulaire de la chambre de combustion peut être réalisée à partir d'un tube préfabriqué sectionné longitudinalement en secteurs, sur toute sa longueur, comme illustré par la figure 2. Dans cet exemple, le tube 20 est partagé en deux secteurs égaux 22, 24.

Les secteurs de tube peuvent être métalliques ou en matériau composite à renfort fibreux. Dans ce dernier cas, les fibres de renfort du matériau composite sont de préférence orientées axialement ou quasi-axialement pour conférer au tube une bonne rigidité. A titre indicatif, le matériau composite constitutif du tube est du type carbone/résine époxy.

Les secteurs 22 et 24 sont mis en place autour du propergol 10 avec interposition de colle. Bien entendu, le diamètre du tube 20 est choisi pour s'adapter à celui du bloc de propergol 10 de façon à reconstituer parfaitement la structure tubulaire par assemblage des secteurs bord à bord.

Dans l'exemple décrit, et comme le montrent les figures 3 et 4, les secteurs 22 et 24 sont disposés sur le propergol (figure 3) ; un bobinage est alors pratiqué sur la structure tubulaire reconstituée (figure 4). Le bobinage est pratiqué essentiellement de façon circonférentielle, ou quasi-circonférentielle. En pratique, le bobinage circonférentiel 28 pourra consister en un bobinage hélicoïdal à très faible pas réalisé au moyen d'une mèche de filaments continus imprégnée de résine. Plusieurs couches sont généralement superposées pour atteindre l'épaisseur désirée.

A titre indicatif, le matériau constitutif du bobinage circonférentiel est du type aramide/époxy dont la résine a une température de polymérisation inférieure à environ 100 degrés C.

Le bobinage circonférentiel ainsi réalisé assure essentiellement la tenue à la pression interne de la chambre de combustion pendant son fonctionnement. La rigidité est apportée par la structure tubulaire formée par l'assemblage des secteurs. Etant fabriqués indépendamment, hors de la présence du propergol, les secteurs 22 et 24 peuvent être réalisés de manière à apporter sans restriction les caractéristiques souhaitées ; en particulier, dans le cas d'un matériau composite, la matrice de ce matériau pourra être constituée par une résine à haute tenue thermique, conférant à la structure tubulaire de la chambre de combustion une immunité aux échauffements rencontrés en service.

Dans l'exemple illustré par les figures 3 et 4, la structure tubulaire constituée par les secteurs 22, 24 s'étend au-delà des fonds avant et arrière de la chambre de combustion, et forme ainsi des jupes 26 permettant la liaison avec d'autres éléments. Afin de reprendre les efforts de torsion auxquels la structure tubulaire est soumise pendant l'utilisation de l'engin comportant le propulseur, on peut réaliser sur celle-ci un bobinage hélicoïdal préliminaire, par exemple à 45 degrés ou un drapage. Ensuite, on effectue comme précédemment un bobinage circonférentiel sur l'ensemble de la structure tubulaire.

On notera que, dans le cas des figures 3 et 4, les fonds arrière 14 et avant 16 sont liés par collage la structure tubulaire au moment de l'assemblage.

En variante, comme illustré par les figures 5 et 6, on assemble directement l'embase 17 et la tuyère 15 sur les extrémités du propergol 10.

Les deux secteurs 22, 24 sont amenés sur le propergol avec interposition de colle et sur les parties de l'embase 17 et de la tuyère 15 adjacentes au propergol (figure 5). Le tube ainsi constitué ne fait plus office de jupe. La liaison de l'embase 17 et de la tuyère 15 à la structure tubulaire entourant le propergol est réalisée par un bobinage hélicoïdal 25 réalisé simultanément sur l'embase et la tuyère et sur le tube reconstitué (figure 5). La fabrication de la chambre de combustion est ensuite terminée par un bobinage circonférentiel 28 réalisé sur la structure tubulaire, par dessus le bobinage hélicoïdal 25, de la même façon que précédemment (figure 6).

Bien entendu, on pourra à titre de variante supplémentaire adopter, à l'avant de la chambre de combustion, la configuration des figures 3 et 4 et, à l'arrière, la configuration des figures 5 et 6.

La disposition inverse est également possible en adoptant, à l'avant la configuration des figures 5 et 6, et, à l'arrière, celle des figures 3 et 4.

Dans ce qui précède, on a envisagé le cas d'une structure tubulaire réalisée à partir d'un tube partagé en deux secteurs égaux. Toutefois, il est bien entendu que le nombre de secteurs pourra être plus élevé, chaque secteur s'étendant de préférence sur un arc non supérieur à 180 degrés.

La fabrication de ces secteurs peut être réalisée de façon non limitative ; elle peut être obtenue indifféremment par réalisation d'un tube cylindrique muni de méplats pour la découpe longitudinale en secteurs, ou encore par moulage ou formage des secteurs.

La structure tubulaire pourra également être constituée par des dispositions variées de secteurs ; elle pourra par exemple être formée de plusieurs couches de secteurs assemblés bord à bord. La figure 7 montre un tel assemblage de quatre secteurs deux à deux ; les secteurs 22 et 24 sont assemblés sur le propergol puis, de façon concentrique et décalés angulairement, les secteurs 21 et 23, afin d'éviter la superposition des jonctions.

On a aussi envisagé dans les figures 1, 3 et 5, le cas d'un propergol segmenté ; la technique décrite pour réaliser la chambre de combustion sur ces segments s'applique l'évidence également à un propergol constitué d'un bloc unique.

**Revendications**

1. Procédé de fabrication d'une chambre de combustion de propulseur à propergol solide munie de fonds arrière et avant, comprenant les étapes de réalisation séparée du propergol (10), de formation d'une structure tubulaire entourant le propergol, liée à celui-ci et constituée de secteurs de tube juxtaposés (22, 24), et réalisation d'un bobinage (28) autour de la structure tubulaire, procédé caractérisé en ce que :
   - le propergol (10) est constitué par au moins un bloc cylindrique (12),
   - les fonds arrière et avant (14, 16) sont assemblés au propergol, aux extrémités de celui-ci,
   - puis la structure tubulaire est formée par mise en place des secteurs de tube (22, 24) autour du propergol et des fonds avec interposition d'une colle, avant réalisation dudit bobinage (28) au moins en direction circonférentielle.

2. Procédé selon la revendication 1, caractérisé en ce que la structure tubulaire constituée par les secteurs de tube (22, 24) forme une jupe (26) à l'une au moins des extrémités de la chambre de combustion, et en ce que, avant le bobinage circonférentiel, un bobinage préliminaire hélicoïdal est réalisé sur toute la longueur de la structure tubulaire afin d'améliorer la résistance aux efforts de torsion.

3. Procédé selon la revendication 1, caractérisé en ce que, après formation de la structure tubulaire et avant réalisation du bobinage circonférentiel, l'un au moins des fonds arrière et avant (14, 16) est assemblé à la structure tubulaire constituée par les secteurs de tube (22, 24) par un bobinage hélicoïdal (25) réalisé simultanément sur le fond et sur la structure tubulaire.

4. Procédé selon l'une quelconque des revendications 1 à 3, caractérisé en ce que le propergol (10) est formé par l'assemblage de plusieurs segments (12).

5. Procédé selon l'une quelconque des revendications 1 à 4, caractérisé en ce que la structure tubulaire est formée de plusieurs couches de secteurs (22, 24, 21, 23) assemblés bord à bord.

6. Procédé selon l'une quelconque des revendications 1 à 5, caractérisé en ce que les secteurs de tube (22, 24) sont réalisés en matériau composite dont la matrice est à haute tenue thermique.

**Claims**

1. Method for the production of a combustion chamber for a solid propellant rocket motor provided with rear and front walls, comprising the steps of producing the propellant (10) separately, forming a tubular structure around the propellant, which structure is fast with the latter and composed of juxtaposed sectors of tube (22,24), and forming a winding (28) around the tubular structure, characterized in that:
   - the propellant (10) is constituted by at least one cylindrical block (12),
   - the rear and front walls (14,16) are joined to the propellant, to the ends thereof,
   - and the tubular structure is formed by positioning sectors of tube (22,24) around the propellant and the walls with interposition of an adhesive, before forming said winding (28) at least in circumferential direction.

2. Method according to claim 1, characterized in that the tubular structure constituted by the sectors of tubes (22,24) forms a skirt (26) at least at one of the ends of the combustion chamber, and in that before forming the circumferential winding, a preliminary helical winding is formed throughout the length of the tubular structure in order to improve the resistance to twisting forces.

3. Method according to claim 1, characterized in that, after formation of the tubular structure and before formation of the circumferential winding, at least one of the rear and front walls (14,16) is assembled to the tubular structure constituted by the tube sectors (22,24) via a helical winding (25) formed simultaneously on the wall and on the tubular structure.

4. Method according to any one of claims 1 to 3, characterized in that the propellant (10) is formed by assembling a plurality of segments (12).

5. Method according to any one of claims 1 to 4, characterized in that the tubular structure is constituted of a plurality of layers of sectors (22,24,21,23) assembled edge-to-edge.

6. Method according to any one of claims 1 to 5, characterized in that the tube sectors (22,24) are produced in composite material whose matrix has a high thermal resistance.

**Ansprüche**

1. Herstellungsverfahren für einen Brennkammerkörper eines Feststofftreibsatzes mit einem vorderen und einem hinteren Boden, mit Ausführungsstufen getrennt für den Treibsatz (10), das Gestalten eines rohrförmigen, den Treibsatz umgebenden, mit ihm verbundenen und aus aneinandergereihten Rohrbogenstücken (22, 24) ausgebildeten Aufbaus und das Durchführen einer Bewicklung (28) um den rohrförmigen Aufbau herum,
**dadurch gekennzeichnet,**
daß der Treibsatz (10) aus mindestens einem zylindrischen Block (12) gebildet wird,
daß der hintere und der vordere Boden (14,16) mit dem Treibsatz an dessen Enden zusammengefügt werden,
daß dann der rohrförmige Aufbau durch Instellungbringen der Rohrbogenstücke (22,24) um den Treibsatz herum und der Böden unter Einfügen eines Klebstoffes vor Durchführen der Bewicklung (28) zumindest in Umfangsrichtung gebildet wird.

2. Verfahren nach Anspruch 1,
**dadurch gekennzeichnet,**
daß der aus den Rohrbogenstücken (22,24) hergestellte rohrförmige Aufbau eine Schürze (26) an mindestens einem Ende des Brennkammerkörpers bildet und
daß vor der Umfangsbewicklung eine vorbereitende schraubenförmige Bewicklung auf der gesamten Länge des rohrförmigen Aufaus durchgeführt wird, um den Widerstand gegen Torsionskräfte zu verbessern.

3. Verfahren nach Anspruch 1,
**dadurch gekennzeichnet,**
daß nach Bilden des rohrförmigen Aufbaus und vor Durchführen der Umfangsbewicklung zumindest der hintere oder der vordere Boden (14,16) mit dem rohrförmigen Aufbau aus Rohrbogenstükken (22,24) durch eine schraubenförmige Bewicklung (25) zusammengefügt wird, die gleichzeitig am Boden und am rohrförmigen Aufbau durchgeführt wird.

4. Verfahren nach einem der Ansprüche 1 bis 3,
**dadurch gekennzeichnet,**
daß der Treibsatz (10) durch das Zusammenfügen von mehreren Segmenten (12) gebildet wird.

5. Verfahren nach einem der Ansprüche 1 bis 4,
**dadurch gekennzeichnet,**
daß der rohrförmige Aufbau aus mehreren Rand an Rand zusammengefügten Rohrbogenschichten (22,24,21,23) gebildet wird.

6. Verfahren nach einem der Ansprüche 1 bis 5,
**dadurch gekennzeichnet,**
daß die Rohrbogenstücke (22,24) in Verbundwerkstoff ausgeführt werden, dessen Matrix eine hohe thermische Widerstandsfähig - keit aufweist.

Fig. 1

16
11
11
14
17
15
12
10
12

Fig. 2

20
22
24

Fig. 3

26
16
22
14
26
15
17
12
12

26
22
26
Fig. 4

28
24
15

Fig.5

17   22   10   25
15
12   12

Fig.6

25
28
15

Fig.7

22   10
21
23
24